# EUROPEAN PATENT SPECIFICATION

(11) **EP 0 945 070 B1**
(45) Date of publication and mention of the grant of the patent: **15.01.2003**
(21) Application number: 98105521.3
(22) Date of filing: 26.03.1998
(51) Int. Cl.: A23G 3/02, A23G 7/00

(54) **A device for turning moulds over**
Umkehrvorrichtung für Formen
Dispositif de retournement de moules

(43) Date of publication of application: 29.09.1999
(73) Proprietor: SOREMARTEC S.A., 6700 Arlon-Schoppach (BE); Ferrero S.p.A., 12051 Alba (Cuneo) (IT); FERRERO OFFENE HANDELSGESELLSCHAFT m.b.H., 60599 Frankfurt (DE)
(72) Inventor: Giamello, Bruno, I-12051 Alba (Cuneo) (IT)
(74) Representative: Rambelli, Paolo

(56) References cited:
- EP-A- 0 018 232
- EP-A- 0 083 324
- EP-A- 0 156 324
- EP-A- 0 156 340
- EP-A- 0 583 739
- EP-A- 0 766 922
- EP-A- 0 806 150
- DE-A- 3 812 805
- US-A- 4 128 377
- PATENT ABSTRACTS OF JAPAN vol. 012, no. 404 (M-757), 26 October 1988 & JP 63 147611 A (MITSUBOSHI BELTING LTD), 20 June 1988
- PATENT ABSTRACTS OF JAPAN vol. 097, no. 012, 25 December 1997 & JP 09 207042 A (AIOI SEIKI KK), 12 August 1997

## Description

The present invention relates to devices for turning over moulds and has been developed with particular attention to its possible use in the food industry, for example, for automatically turning over moulds used in the manufacture of confectionery products.

Examples of the prior art are given, for example, by EP-A-0 083 324, EP-A-0 583 739 or EP-A-0 766 922.

These documents show that the problem of turning over a generally flat mould may arise during various operations, including the possible fitting together/taking apart of two half-moulds which are intended to cooperate with one another in a generally book-like configuration. The following description, however, will relate to the simplest form in which this problem arises, that is, to an operation performed on a mould advancing in a plane defined by the path of movement of a conveyor (for example, a chain conveyor) in order to turn it through 180°. This operation may be necessary, for example, in order to remove from the mould products formed in corresponding recesses in the mould, which at the time in question, face upwards. Turning through 180° brings these recesses to a downwardly facing position, enabling the products to be removed from the respective recesses (possibly by the action of gravity alone) with the consequent deposition of the products on an underlying strip.

At least in some applications, this strip may already have been fitted on the mould and may thus itself be subjected to the turning action. The present description and the claims appended thereto will therefore refer, for simplicity, to a "mould", this term being intended to define, in general, a generally flat object (which may in fact be constituted by an actual mould, a half-mould, a pair of half-moulds fitted together, a mould or a half-mould carrying one or more associated closure strips, etc.), which is to be turned between a first position and a second position through an angle of rotation generally of 180°.

The aforesaid operation usually has to be performed on a " mould" which is advancing on a conveyor line. As is shown, amongst other things, by the earlier documents cited in the introduction to the present description, this involves the need to operate on a mould which has been stopped in the turning station by interruption of its forward movement, or to arrange for the turning device to be able, so to speak, to follow the mould, turning it without interruption of its forward movement.

In both cases, difficulties may arise as a result of the need to achieve precise relative positioning between the moulds and the portions of the turning device which are intended to act on the mould in order to turn it over.

Thus, for example, the solutions described in EP-A-0 083 324 and in EP-A-0 766 922 provide for the use of fork- or wedge-shaped portions for gripping the outer edges of the mould and/or for entering housing recesses of the mould, at the same time performing a certain locating action. The solution described in EP-A-0 583 739, on the other hand, provides for the mould which is to be turned over to be forced sideways against an abutment element which defines the turning axis.

EP-A-0 018 232, DE 38 12 805A and US 4 128 377 disclose an apparatus for inverting moulds comprising upper and lower jaw-like elements and associated drive means for rotating the jaws.

Precise relative positioning of the mould and of the elements for acting thereon is a requirement which is ever more difficult to satisfy with increasing speeds of advance of the moulds on which the operation is being performed. This applies not only with the use of the solution of following the moulds during the turning action, but also when the mould is stopped in the region of a turning unit. To stop a mould which is moving at a fast speed of advance in fact involves an abrupt deceleration in the course of which it may be difficult to control the path of the mould precisely during braking.

Moreover, in many applications, there is a need to perform the turning action on moulds which are advanced by means of motor-driven chains extending on opposite sides of the line of advance of the moulds.

The presence of these chains is critical since they are usually disposed in the immediate vicinity of the moulds which are in fact transported by pins extending from the chains towards the moulds.

The location of a conventional turning device between each chain and the moulds is critical both for reasons of space and because the turner would interfere with the forward movement of the conveyor pins.

Purely and simply to locate the turner outside the chain does not *per se* solve the problem since, at this point, the chain which is interposed between the turner and the mould, may interfere with the turning movement.

It would actually be possible to consider dividing the portion of the conveyor affected into two sections arranged in cascade and interposing the turner between the two sections. Regardless of any other consideration, the implementation of this hypothetical solution, however, is quite complex and in any case difficult and, moreover, it is not suitable for implementation on a pre-existing conveyor.

There is therefore a need to provide a solution which, whilst retaining the advantages of the solutions described above, solves the problems intrinsic therein and also solves the hitherto unsolved problem relating to the possibility of removing the product from the mould onto a strip in an orderly manner with the consequent possibility of subsequently transferring it on continuous supply lines for packaging machines.

According to the present invention, this object is achieved by means of a turning device having the characteristics recited in the following claims.

The invention will now be described, purely by way of nonlimiting example, with reference to the appended drawings, in which:
Figure 1 is a schematic, side elevational view of a turning device according to the invention,
Figure 2 is another schematic, front elevational view of the same device; in practice, Figure 2 may be considered as a view sectioned on the line II-II of Figure 1,
Figure 3 shows the portion of Figure 2 indicated by the arrow III, on an enlarged scale, and
Figure 4 is a view taken on the arrow IV-IV of Figure 3.

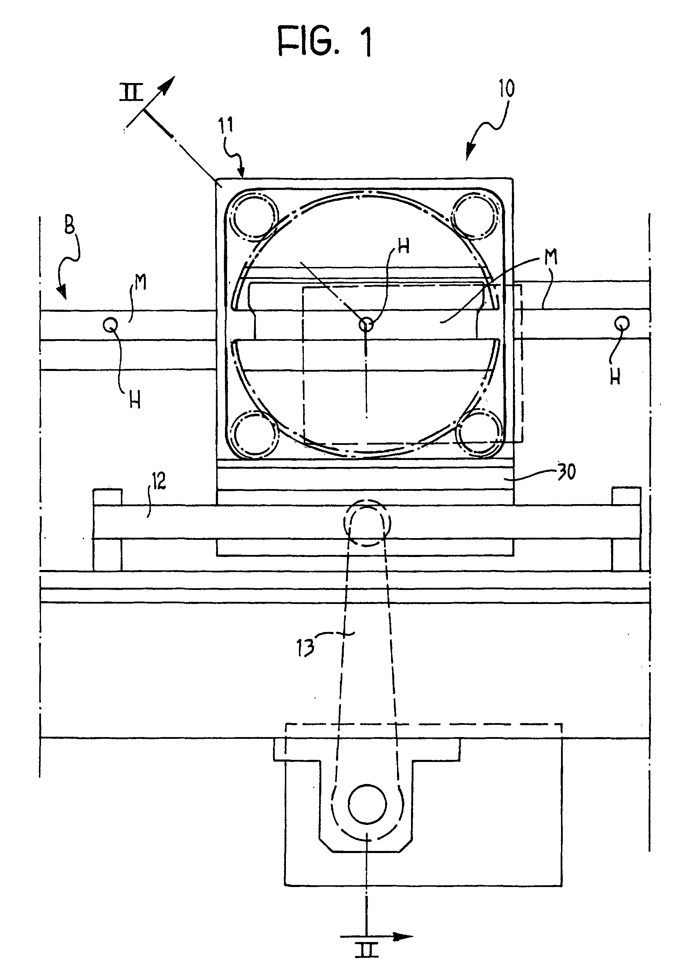

In Figure 1, a conveyor line, generally indicated B, is used for advancing a substantially continuous flow of moulds M, for example, within a plant for manufacturing food products or confectionery products. The moulds M, which have respective opposite faces (which may be the upper or lower faces according to the position of the mould at the time in question), thus advance along a path lying in a given plane.

Various possible variants of lines of this type are widely known in the art. A detailed description thereof is therefore superfluous herein. Naturally, this also applies to the identification of the flat articles indicated M as moulds. In this connection, reference is made once again to the terminological definition given above.

In the embodiment shown - purely by way of example - herein, it is assumed that the conveyor line B is of the type comprising, as active elements acting on the moulds M in order to transport them, two parallel passes of chain C running on the two opposite sides of the flow of moulds M so as to be coplanar therewith. Both of the chains C have pins P for engaging corresponding holes H in the sides of the moulds M, the pins P being disposed at regular intervals the size of which corresponds in practice to the length (measured in the direction of advance) of the moulds M. The holes H are preferably arranged in positions at the centres or at the centres of gravity of the moulds and their condition of engagement with the pins P is such as to permit relative rotation about an axis coplanar with and transverse the path of movement of the moulds M.

The combination of the device according to the invention with a conveyor line of this type is not however essential; it is, however, a greatly preferred choice since, as will become clearer from the following, the two pins P which simultaneously engage the same mould M on opposite sides thereof jointly define an axis (lying on the line of alignment of the pins P of the pair) about which the mould M can be turned safely and precisely.

The turning device according to the invention, generally indicated 10, comprises at least one and preferably two turning units 11 arranged symmetrically opposite one another on the two sides of the path of advance of the moulds M in order to act on the opposite sides of the moulds M.

Before the structure of the turning units 11 is described in detail, it should be noted that they may be mounted either in a fixed position or in a configuration (to which the appended drawings relate) such as to enable the moulds M to be followed during the turning operation.

In the first case, the two units 11 are mounted on a corresponding fixed framework on opposite sides of the path of a movement of the moulds. The ends of the moulds M advancing on the line B can pass through the two units 11 in a central or - more precisely diametral- position; in this connection, see the side view of Figure 1.

In the second case (to which the drawings relate specifically) the two turning units 11 can perform a coordinated reciprocating motion along the line of advance of the moulds M. The units 11 can thus perform in a coordinated manner:
- a forward travel in the direction of advance of the moulds M, during which the two units 11 engage a mould M on opposite sides - as will be described further below - turning it over, and
- a return travel in the opposite direction to the direction of advance of the moulds, during which, having released the mould M which has just been turned over, the two units 11 return to the starting position of the active travel in order to engage a new mould M to be turned over.

In the embodiment described herein - which is described by way of example - each of the units 11 is mounted for sliding on a horizontal cylindrical guide 12 which extends parallel to the path of advance of the moulds M, and hence to the path of the chains C, in a position generally below the respective unit 11.

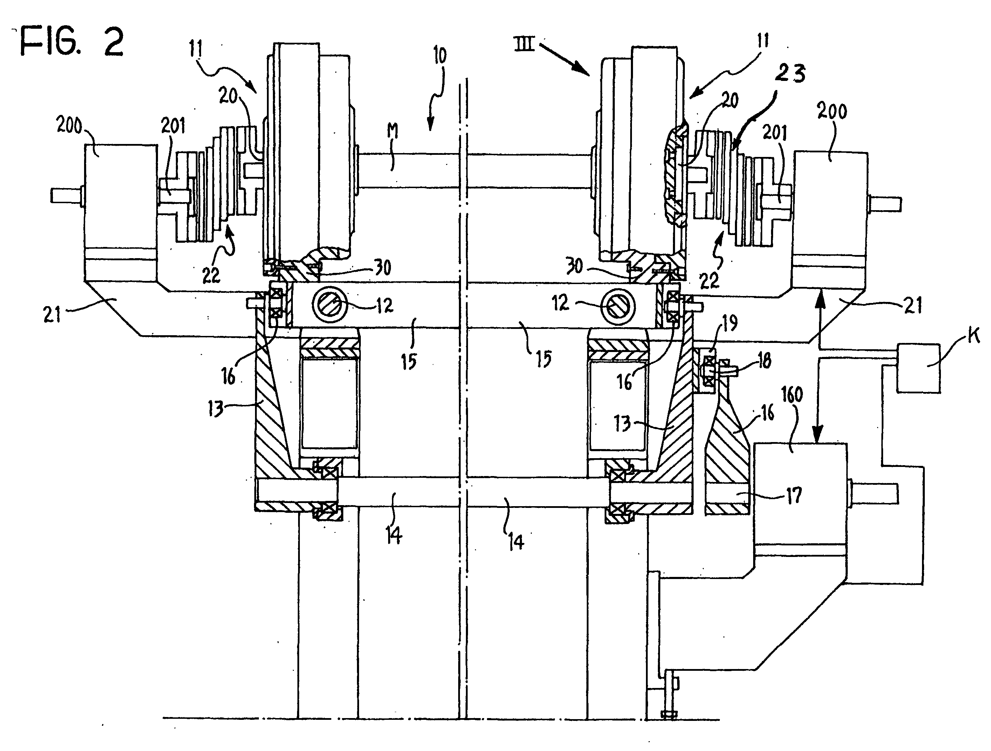

The unit 11 can perform the necessary reciprocating motion on the respective guides 12 under the action of a crank 13 (in this connection compare Figures 1 and 2).

To ensure precise relative positioning of the moving parts, the cranks 13 which act on the two units 11 (on the two sides of the conveyor line B) are connected to one another at their proximal ends by a shaft 14. The shaft 14 extends horizontally and transversely beneath the conveyor line B, in practice defining the common axis of pivoting of the cranks 13. Moreover, the two units 11 are connected to one another rigidly by a framework element 15 which also extends transversely beneath the line B. The framework element 15 may be constituted simply by a shaft or, preferably, by a plate or similar element, if necessary with a lattice structure, which can ensure firm connection and precise alignment of the units 11.

As can best be seen in the view of Figure 2, the two cranks 13 preferably act on the ends of the framework element 15 with the interposition of respective bearings 16 carried by the distal ends of the cranks 13 and each cooperating with a corresponding guide recess for the following movement, provided on the outside of the framework element 15.

The swinging movement of the cranks 13 (and hence the reciprocating motion of the units 11) is brought about by at least one further crank 16 keyed by its proximal end to the shaft 17 of a drive member 160 capable of the necessary swinging movement. For example, this may be a device of the type currently known as an "intermitter" which can convert the continuous and uniform rotary motion of a drive member such as an electric motor (not shown) into a periodic reciprocating rotary motion. Devices of this type are widely known in the art and do not therefore need to be described specifically herein.

The further crank 16 carries, mounted at its distal end, a bearing 18 cooperating with a corresponding guide recess 19 for the following movement, located in the vicinity of the distal end of the crank 13.

Whichever specific embodiment is adopted, the movement of the crank 13, and hence of the units 11, may be brought about in accordance with the criteria described, for example, in EP-A-0 614 733, in a manner such as to optimize the following of the moulds M by the turning unit 11. Although the solution given above is preferred, it is not essential.

Before the structure of the units 11 is described in detail, it will also be noted that each of the units 11 is driven, in accordance with criteria which will be described further below, by a shaft 20 rotated by a respective motor 200. The motor 200 is preferably mounted on a bracket 21 located in a fixed position relative to the framework of the device 10. The transmission of the motion between the motor 200, which is located in a fixed position, and the shaft 20 which is associated with the respective unit 11 and hence moves with the same reciprocating motion following the moulds M, is achieved, for example, by means of a coupling 23 of the type currently known as a PK coupling (an acronym for the German term "Parallel Kurbelgetriebe" or "Parallel Crank Mechanism") interposed between the output shaft 201 of the motor 200 and the shaft 20.

Naturally, the specific embodiments described above are intended to be preferred but not essential selections. Equivalent solutions which achieve the same final result are well known to experts in the art. Incidentally, it is pointed out once again that the selection of imparting to the units 11 a movement following the moulds M constitutes a preferred but not essential solution.

To describe in greater detail the structure of the units 11 (which are arranged symmetrically opposite one another and a full description of only one of which is therefore given below, this description also being applicable directly to the other) it will be noted that they have a generally drum-like structure with a horizontal principal axis (in the normal operating position). In practice (see in particular the view of Figure 1), when the mould M being subjected to the turning action at the time in question is precisely positioned and located with the units 11, the axis of the drum structure in fact coincides with the axis identified by the pins P of the chain C and by the holes H engaged thereby.

The drum structure in question is composed essentially of the following elements:
- a fixed portion or stator 30 constituting the portion which is fixed to the framework 15,
- a rotor 31 which, in the embodiment shown by way of example, comprises two jaw-like portions 31a and 31b mounted on the face of the stator 30 which faces the moulds M,
- a drive gear 32 rotated by the shaft 20 and mounted on the opposite side of the stator 30 to the moulds M, and
- a plurality of rollers 33 (four in the embodiment shown) for transmitting the motion from the drive gear 32 to the rotor 31.

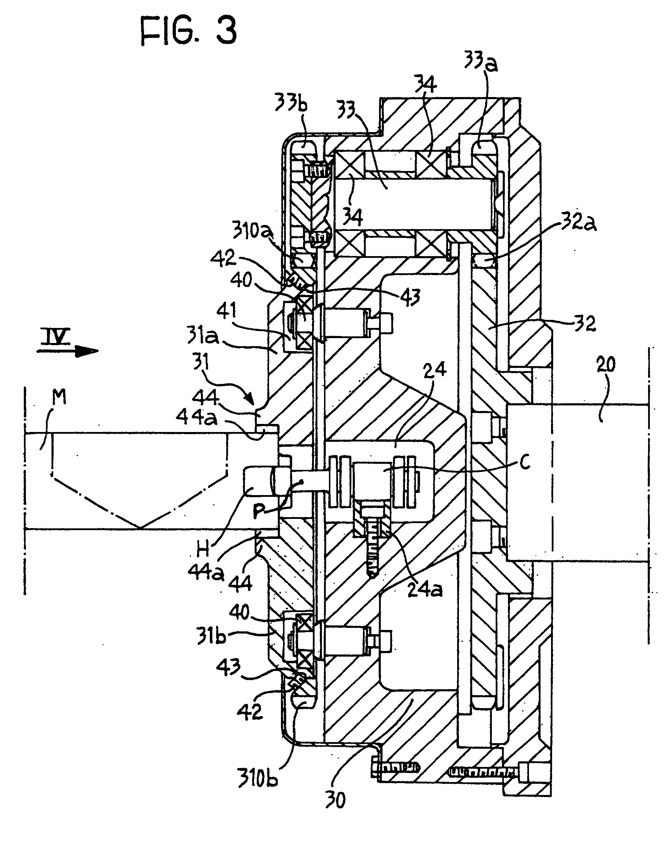

As can best be appreciated in the views of Figures 2 and 3, the stator 30 has a generally channel-shaped central diametral recess 24 extending horizontally so that the chain C of the line B for transporting the moulds can pass through it. Again with reference to Figures 2 and 3, it can be seen that the body of the chain C is housed entirely within the recess 24 and the pins P project from the recess 24 into the space disposed between the two jaws 31a and 31b constituting the rotor 31.

In greater detail, it can be seen that a guide 24a is mounted on the lower side of the recess 24 and acts as a sliding track for the movable chain pass C.

Moreover, the stator 30 supports, in a generally peripheral position, sets of bearings 34 (only one of which is visible specifically in Figures 2 and 3) for supporting the rollers 33.

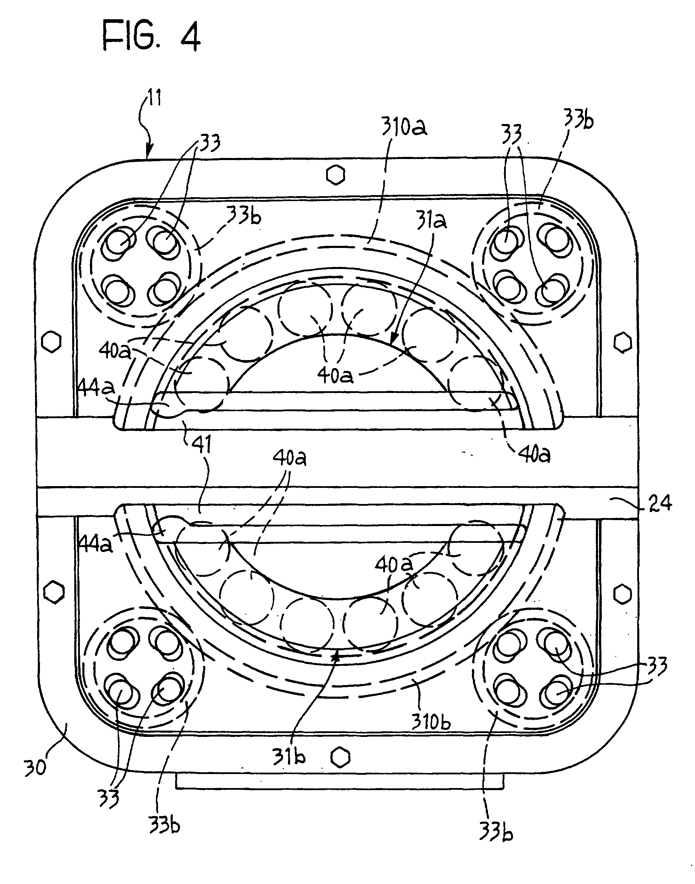

The drive gear 32 has a peripheral set of teeth 32a. This set of teeth meshes with corresponding peripheral sets of teeth 33a of the rollers 33. Each of the rollers also has a second set of end teeth 33b at the opposite end to the gear 32, and hence substantially in the same plane as the rotor 31. The various sets of teeth 33b of the rollers 33 mesh (see in particular Figure 4) with corresponding C-shaped sets of teeth, indicated 310a and 310b, provided on the outer edges of the two jaws 31a and 31b constituting the rotor 31.

These jaws are supported on the stator 30 with the interposition of sets of rollers 40 arranged (see Figure 4) in two groups, that is, an upper group 40a and a lower group 40b, each of which comprises six rollers in the embodiment shown.

On the side facing the rollers 40, both of the jaws 31a and 31b, which are substantially semicircular in the embodiment shown, have respective recesses 41, also of semicircular shape, for acting as races for the rollers 40.

Holding bodies 42 (see Figure 3) in the form, for example, of grub screws cooperating in respective peripheral grooves 43 of the jaws 31a and 31b, ensure that the jaws retain their mounting position on the stator 30 with the ability to rotate on the groups of rollers 40a and 40b.

The set of elements described above ensures that each of the jaws 31a is restrained on the stator 30 with the ability to follow an orbital path which brings, for example, the jaw 31a (or the jaw 31b, respectively) from the position shown in Figure 4, in which the jaw is located in a symmetrical position on the group of rollers 40a (or 40b) to a position in which the jaw starts to leave some of the rollers of the group which previously supported it in order then to be arranged like a bridge across the recess 24, the jaw then going on to engage the rollers of the other group, leaving the first group of rollers which previously supported it in order to move fully onto the other group. Finally, the jaw returns, still advancing in the same direction, (the behaviour is in any case symmetrical, regardless of the direction of rotation) to be arranged like a bridge over the recess 24 again and then gradually to return to the starting position considered above.

The angular position reached by each of the jaws 31a, 31b, at any particular time whilst following this path is clearly defined by the condition of engagement with the rollers 33 which act as drive rollers since they are rotated by the gear 32 as a result of the meshing of the teeth 32a and 33a.

The presence of a plurality of rollers (and, in particular, four rollers 33, since the aforesaid rollers are spaced angularly at 90° intervals around the principal axis of the drum structure of the unit 11) in a manner correlated with the angular extent of the jaws 31a, 31b ensures that, whatever angular position the two jaws 31a and 31b have reached, they are always and in any case in conditions of at least marginal engagement with at least one pair of consecutive rollers 33. Naturally, although this solution is preferred, it is also not essential; the important thing is that the jaws 31a and 31b have associated drive means which enable them to be rotated in the same direction and in coordinated manner as described above, their relative positions being kept unchanged, that is, with the two jaws 31a and 31b situated in opposite angular positions, that is, offset by 180°.

As stated, the jaws 31a and 31b have approximately semicircular, or in any case C-shaped, profiles with arcuate outer sides carrying the teeth 310a, 310b, and straight front or inner sides. When the jaws 31a and 31b are located in the position shown in Figure 3, that is, with their straight sides arranged in a horizontal position, the jaws extend with respective projecting elements 44 provided on their straight sides disposed along the upper face and along the lower face, respectively, of the mould M which is advancing through the turning device.

In practice, with particular reference to the view of Figure 3, the projecting elements 44 (which may be continuous or discontinuous) constitute a pair of lips which can grasp the upper and lower faces of the respective side of the mould M with more or less close contact so as to be able to impart the turning movement to the mould M. This results from the orbital movement of the jaws brought about by the drive gear 32 by means of the rollers 33 as described above.

As can best be seen in the view of Figure 4, the elements 44 may have rounded end edges (indicated 44a in the drawing) for guiding the moulds M in their forward movement between the jaws, rendering their positioning more precise and also, possibly, exerting a certain gripping or retaining action on the opposite faces of the mould M.

As already stated above, the currently-preferred solution shown in the drawings provides for the pins P projecting from the conveyor chain C and engaging in the holes H in the moulds to define the turning axis of the moulds.

Whether the solution adopted is one in which the units 11 are in a fixed position with the mould M being stopped before being turned over, or one in which the units 11 follow the mould M (the turning movement in this case nevertheless also being performed in a situation in which there is no relative translational movement between the units 11 and the mould M), the turning movement is performed when the pins P and the holes H are positioned on the principal axis of the structure 10.

When this position has been reached, the motors 200 are operated so as to rotate the shafts 20, the gears 32 driven thereby and, consequently, the rollers 33 and the jaws 31a, 31b of the two units 11.

By the effect of the rotation (which takes place in the same direction on the two sides of the mould M and which will be assumed to be brought about through an angle of 180°,) the mould M aligned with the turning units 11 at the time in question is arranged with its opposite ends confined between the projecting elements 44 of the jaws 31a, 31b of the turning units 11.

The rotating movement of the jaws is thus transmitted to the mould M. The mould M is therefore turned over as a result of the rotation about the axis defined by the pins P which engage rotatably in the holes H situated on the two opposite sides of the mould.

When this movement has been performed, the mould M which has just been turned over can be released by the turning device 10 as a result of longitudinal sliding relative to the recesses 24 of the two units 11.

This relative sliding movement may be caused:
- in turning devices with fixed units 11, by the fact that the mould M just turned over is advanced again by the conveyor line B which is restarted as soon as the turning movement is completed, or
- in the case of turning devices which follow the mould M during turning, by the fact that, once the forward travel of the units 11 in the same direction and at a speed synchronous with the motion of the conveyor line B has been completed, as soon as the mould M has been turned over, the units 11 start the return travel towards the starting position of a new active forward travel for turning a mould M.

In the latter case, upon completion of the return travel, the units 11 are in fact arranged in engagement with a new mould M to be turned over. In the previously-described case with the units 11 in fixed positions, the movement for the extraction of a turned mould M corresponds, precisely because of the resumed advance of the line B, to the introduction into the units 11 of a new mould M to be turned over.

In both cases, the generally symmetrical structure of the jaws 31a, 31b means that, for each complete rotation (through 360°), it is possible to turn two moulds in succession (through an angle of 180°).

The rotary motion of the jaws (motor 200), the movement of the conveyor line B, and (in the case of the solution which provides for the moulds to be followed, as in the embodiment illustrated), the operation of the motors 160 which bring about the swinging of the units 11 necessary to achieve the following movement, are controlled by a processing unit K which generally supervises the operation of the turning device and/or of the plant in which it is fitted. This may, for example, be a processing unit of the type currently known as a PLC (Programmable Logic Controller) or an equivalent device. The configuration, connection and programming criteria of such processing units are well known in the art, particularly with regard to automatic packaging plants, and do not therefore need to be described in detail herein.

As already stated in the introduction to the present description, the use of a conveyor line B of the type illustrated in the drawings in many ways constitutes a preferred solution. In this solution, the turning axis of the moulds M is defined as a result of the cooperation of elements (the pins P extending into the holes H) which are in engagement with one another both before and after the turning movement (naturally as well as during this movement).

In this case, the function of the jaws 31a, 31b is essentially that of cooperating with the opposite faces of the moulds M in order to impart the turning movement thereto. The condition of cooperation between the jaws 31a, 31b and the mould may therefore even be quite loose. In this case, the jaws 31a, 31b essentially have the function of pushing the mould M, causing it to rotate about an axis defined by elements which were already in engagement with one another and which remain in engagement before and after the turning operation. This enables the turning movement to be performed very precisely whether the mould M has to be stopped (even quite abruptly) before being turned over or whether the mould M advancing on the line B is followed by the units 11 which turn it over.

Although this solution is preferred, it is not, however, essential.

For example, the device according to the invention may be used, naturally with modifications within the capabilities of an expert in the art, in combination with conveyor lines for moulds on which the moulds advance in conditions of substantially free transportation; in this connection see the solution described in EP-A-0 583 740.

In this case, the jaws 31a, 31b have to be able not only to perform the necessary pushing action which brings about the turning movement but also to restrain the mould M during turning. For this purpose there are various possible solutions such as that of associating with one or both of the jaws 31a, 31b drive elements (not shown in the drawings) which enable them to move between a generally opened out position, so as to allow the mould M entering and leaving,the device 10 to advance freely before and after turning, and a closed position adopted for holding the mould M during the turning movement. At least in some cases, a simple alternative consists in providing the jaws 31a, 31b (in particular in the region of the projecting elements 44 which are intended to cooperate principally with the opposite faces of the moulds M) with resilient gripping elements (for example lip seals made of soft material). These elements permit the longitudinal introduction and extraction movement of the mould M before and after turning and, at the same time, enable an adequate gripping and retaining action to be performed on the mould M during turning. Whichever solution is adopted, it will be appreciated that the substantial advantage of the invention is in any case retained, given that the turning movement can be performed efficiently and quickly even when there is a certain error in the relative positioning (static in the case of fixed turners, dynamic in the case of turners with following capability) of the mould relative to the turner.

One of the main advantages offered by the solution according to the invention lies in the fact that it is possible to remove the products from the mould in an orderly manner onto strips and in particular onto a strip which may be associated with the mould before the turning so that the strip also undergoes the turning movement and is immediately available to receive the products which come out of the downwardly-facing cells of the mould.

In particular, the aforesaid strip may be associated with the mould simply by being laid thereon.

It is clear from the foregoing description that this result can be achieved precisely because the turning units 11 comprise a fixed or stator portion having the recess 24 for allowing the chains C to advance and a movable portion or rotor (the jaws 31a, 31b) which projects beyond the chains C into the space between the chains C and the moulds M in order to grasp the moulds M (and any associated strips for receiving products removed form the moulds) without, however, interfering with the movement either of the chains or of the pins P. This is because the jaws 31a, 31b perform, so to speak, a rotary movement about a purely virtual central axis defined by the homocentric arcuate paths of the trains of rollers 40 which is not represented physically by any central member of the turning unit 11.

A further advantage intrinsic in the solution illustrated in the drawings and described in detail above lies in the fact that, since the moulds M are supported only laterally by the pins P (at least in the region in which the turner 10 acts) the turning movement is not obstructed by elements disposed beneath the moulds M. If the solution according to the invention is adopted in combination with conveyor lines B which provide for the presence of elements disposed beneath the moulds M (such as, for example, a conveyor element on which the moulds M are arranged) it is necessary to provide a break in these elements in the region of the turning device in order for the turning movement not to be obstructed, or to provide for the turning movement not to take place about a substantially central axis relative to the moulds M (as in the embodiment illustrated) but on an axis situated in an end position relative to the mould and thus arranging for the turning movement to take place, for example, entirely above a conveyor structure on which moulds M are disposed.

Although the embodiment illustrated provides for the presence of two turning units 11 arranged symmetrically on either side of the path of advance of the moulds M so as to be able to engage respective sides of the moulds M being turned, the solution may also be implemented with a single unit of this type acting on one side of the path of advance of the moulds M, the other side simply being provided with an abutment element which can accompany and support the mould M in the turning movement. In the embodiment shown, this abutment element may be constituted simply by the pin P of the chain C which is disposed on the other side of the path of advance of the moulds.

It will also be appreciated that one of the advantages of the solution according to the invention is that, when the device according to the invention is brought to the deactivated condition with the recess or recesses 24 kept in alignment with the path of advance of the moulds M, the moulds M can pass through the device freely. In these conditions, of course, the moulds M are not turned over but their advance is not in any way obstructed by the presence of the turning device 10.

Naturally, the principle of the invention remaining the same, the details of construction and forms of embodiment may be varied widely with respect to those described and illustrated, without thereby departing from the scope of the present invention as defined by the appended claims.

## Claims

1. A device (10) for turning over moulds (M) having respective opposite faces and advancing along a path lying in a given plane, comprising on at least one side of the path, a turning unit (11) comprising a pair of jaw-like elements (31a, 31b) which can engage to two opposite faces of the moulds (M) being turned, the turning unit (11) carrying respective associated drive means (200) for imparting to the facing jaw-like elements (31a, 31b) a co-ordinated rotary motion in the same direction, **characterised in that**:
- the turning unit (11) comprises a stator portion (30) on which the jaw-like elements (31a, 31b) are mounted with the ability to perform the rotary motion,
- each of the jaw-like elements (31a, 31b) has a front edge (44) for co-operating with a respective one of the opposite faces of the moulds (M) during the turning movement, the front edge (44) defining, with the homologous front edge (44) of the other jaw-like element (31a, 31b), a recess (24) which can extend in the given plane to allow the moulds (M) to advance through the turning unit (11), said recess (24) extending at least partially in the stator portion (30) of the turning unit (11) for housing conveyor means (C) which transport the moulds (M) during the movement of advance along the path.

2. A turning device according to Claim 1, **characterized in that** the jaw-like elements (31a, 31b) are generally C-shaped with a generally straight inner side (44) for cooperating with the moulds (M) and a generally arcuate outer side (310a, 310b).

3. A turning device according to Claim 1 or Claim 2, **characterized in that** the jaw-like elements (31a, 31b) comprise respective projecting elements (44) for cooperating with the two opposite faces of the moulds.

4. A turning device according to Claim 1, **characterized in that** the conveyor means (C) comprise engagement elements (P) which can act on the moulds (M) in a transporting relationship substantially in the region of the jaw-like elements (31a, 31b).

5. A turning device according to Claim 4, **characterized in that** the engagement elements comprise at least one pin (P) extending towards the path of advance of the moulds (M) so as to define, with respect to the mould engaged at the time in question, a centre of rotation for the turning movement.

6. A turning device according to Claim 1, **characterized in that** the turning unit (11) comprises:
- a stator portion (30),
- a first and a second guide means (40) each defining a respective arc of a circular path, the first and second guide means (40) cooperating with the jaw-like elements (31a, 31b) in a relationship of support with movability in order to allow the jaw-like elements (31a, 31b) to perform ,the coordinated rotary motion in the same direction.

7. A turning device according to Claim 6, **characterized in that** the first and second guide means are constituted by respective groups of rotating bodies (40).

8. A turning device according to Claim 6 or Claim 7, **characterized in that** the first jaw-like elements (31a, 31b) comprise respective recesses (41) cooperating with the first and second guide means (40) in a longitudinal sliding relationship.

9. A turning device according to Claim 1, **characterized in that** the jaw-like elements (31a, 31b) have respective arcuate outer edges lying on a common circular path and having respective sets of teeth (310a, 310b), and **in that** the respective drive means (200) act on the sets of teeth (310a, 310b) provided on the jaw-like elements.

10. A turning device according to Claim 9, **characterized in that**:
- the jaw-like elements (31a, 31b) have a given angular extent, and
- the respective drive means carry an associated plurality of rotary drive elements (33) the number of which is such that, regardless of the position reached in the coordinated rotary motion in the same direction, each of the jaw-like elements (31a, 31b) is arranged in a relationship of cooperation with at least two of the rotary elements (33).

11. A turning device according to Claim 10, **characterized in that** the rotary elements are spaced uniformly along the path of the coordinated rotary motion of the jaw-like elements (31a, 31b) in the same direction.

12. A turning device according to Claim 1, **characterized in that** the turning unit (11) comprises:
- a main drive gear (32) arranged on the opposite side of the turning unit (11) to the path of advance of the moulds (M), and
- at least one kinematic transmission element (33) which extends through the turning unit (11) in order to transmit the motion from the main drive gear (32) to the jaw-like elements (31a, 31b).

13. A turning device according to Claim 12, **characterized in that** the turning unit (11) comprises:
- a stator portion (30),
- the main drive gear (32) mounted on the stator portion (30) on the opposite side to the path of advance of the moulds (M),
- rotation support means (40, 41) for supporting the jaw-like elements (31a, 31b) so that they can rotate on the stator portion (30) on the side of the turning unit (11) facing the path of advance of the moulds (M), and
- a plurality of kinematic transmission elements in the form of rotary elements (33) distributed around the periphery of the stator portion (30) in order to transmit the motion from the main drive gear (32) to the jaw-like elements (31a, 31b).

14. A turning device according to Claim 13, **characterized in that** both the main drive gear (32) and the jaw-like elements (31a, 31b) have respective toothed peripheral portions (32a, 310a, 310b), and **in that** the rotary elements (33) extend generally transversely relative to the stator portion (30) with respective end ring gears (33a, 33b) meshing with the peripheral teeth of the main drive gear (32) and with the jaw-like elements (31a, 31b), respectively.

15. A turning device according to any one of Claims 13 and 14, **characterized in that** the rotary elements (33) are mounted on the stator portion (30) of the turning unit with the interposition of respective bearings (34).

16. A turning device according to any one of Claims 1 to 15, **characterized in that** the turning unit (11) is located in a fixed position relative to the path of advance of the moulds (M).

17. A turning device according to any one of Claims 1 to 15, **characterized in that** the turning unit (11) carries respective associated drive means (12 to 19, 160) for imparting to the turning unit (11) a reciprocating motion substantially coplanar with the path of advance of the moulds.

18. A turning device according to Claim 17, **characterized in that** the drive means comprise a crank drive unit (13 to 19).

19. A turning device according to any one of Claims 17 and 18, **characterized in that** the respective drive means (200) which impart the rotary motion to the jaw-like elements (31a, 31b) comprise at least one main motor (200) located in a fixed position relative to the path of advance of the moulds, as well as a transmission element (22) acting between the main motor (200) and the turning unit (11) which performs the reciprocating motion.

20. A turning device according to Claim 19, **characterized in that** the means (22) for transmitting the motion comprises a parallel crank coupling (PK).

21. A turning device according to any one of Claims 1 to 20, **characterized in that** it comprises a pair of turning units (11) disposed in symmetrically opposed positions relative to the path of advance of the moulds (M).

22. A turning device according to Claim 17 and Claim 21, **characterized in that** the turning units (11) of the pair are connected to one another rigidly by a framework element (15) which extends transversely relative to the path of advance of the moulds (M), the framework element (15) also performing the reciprocating motion.

23. A turning device according to any one of Claims 21 and 22, **characterized in that** the turning units (11) of the pair carry respective associated drive cranks (13), the respective drive cranks (13) being connected to one another rigidly by a connection shaft (14) extending transversely relative to the path of advance of the moulds.

24. A turning device according to Claim 1, **characterized in that** the jaw-like elements extend in the space between the entrainment means (C) and the moulds (M) and are supported for rotation on the stator portion (30) by homocentric support elements (40) defining a purely virtual central axis of rotation.

## Patentansprüche

1. Vorrichtung (10) zum Umdrehen von Formen (M), welche entsprechende gegenüberliegende Flächen aufweisen und welche entlang eines Pfades vorrücken, der in einer vorgegebenen Ebene liegt, wobei zumindest an einer Seite des Pfades eine Dreheinheit (11) vorgesehen ist, welche ein Paar von klauenähnlichen Elementen (31a, 31b) aufweist, welche mit den beiden gegenüberliegenden Seiten der Formen (M) in Eingriff gebracht werden können, die zu drehen sind, wobei die Dreheinheit (11) entsprechende angegliederte Antriebseinrichtungen (200) zur Aufbringung auf die zugewandten klauenähnlichen Elemente (31a, 31b) in einer koordinierten Drehbewegung in derselben Richtung trägt, **dadurch gekennzeichnet, dass**:
die Dreheinheit (11) einen Statorabschnitt (30) aufweist, an welchem die klauenähnlichen Elemente (31a, 31b) mit der Fähigkeit angebracht sind, die Drehbewegung durchzuführen,
jede der klauenähnlichen Elemente (31a, 31b) eine Frontkante (44) zur Kooperation mit einer entsprechenden der gegenüberliegenden Seiten der Formen (M) während der Drehbewegung aufweist, wobei die Frontkante (44) zusammen mit der entsprechenden Frontkante (44) des anderen klauenähnlichen Elements (31a, 31b) eine Aussparung (24) definiert, welche sich in der vorgegebenen Ebene erstrecken kann, um es den Formen (M) zu ermöglichen, durch die Dreheinheit (11) vorzurücken, wobei sich die Aussparung (24) zumindest teilweise in den Statorabschnitt (30) der Dreheinheit (11) erstreckt, um die Fördereinrichtung (C) unterzubringen, welche die Formen (M) während der Vorrückungsbewegung entlang dem Pfad transportiert.

2. Drehvorrichtung nach Anspruch 1, **dadurch gekennzeichnet, dass** die klauenähnlichen Elemente (31a, 31b) im allgemeinen C-förmig mit einer im allgemeinen geraden inneren Seite (44) zur Kooperation mit den Formen (M) und einer im allgemeinen bogenförmigen äußeren Seite (310a, 310b) ausgeformt sind.

3. Drehvorrichtung nach Anspruch 1 oder 2, **dadurch gekennzeichnet, dass** die klauenähnlichen Elemente (31a, 31b) entsprechende hervorstehende Elemente (44) zur Kooperation mit den beiden gegenüberliegenden Seiten der Formen aufweisen.

4. Drehvorrichtung nach Anspruch 1, **dadurch gekennzeichnet, dass** die Fördereinrichtung (C) Eingriffselemente (P) aufweist, welche auf die Formen (M) in einer Transportbeziehung im wesentlichen in dem Bereich der klauenähnlichen Elemente (31a, 31b) wirken.

5. Drehvorrichtung nach Anspruch 4, **dadurch gekennzeichnet, dass** die Eingriffselemente zumindest einen Zapfen (P) aufweisen, welcher sich in Richtung des Pfades der Vorrückung der Formen (M) erstreckt, so dass im Hinblick auf die Form, welche in der fraglichen Zeit im Eingriff ist, ein Zentrum der Drehung für die Drehbewegung definiert wird.

6. Drehvorrichtung nach Anspruch 1, **dadurch gekennzeichnet, dass** die Dreheinheit (11) aufweist:
einen Statorabschnitt (30),
eine erste und eine zweite Führungseinrichtung (40), welche jeweils einen entsprechenden Boden eines kreisförmigen Pfades definieren, wobei die erste und die zweite Führungseinrichtung (40) mit den klauenähnlichen Elementen (31a, 31b) in einer Lagerbeziehung mit der Bewegbarkeit zusammenwirken, um es den klauenähnlichen Elementen (31a, 31b) zu ermöglichen, die koordinierte Drehbewegung in der gleichen Richtung durchzuführen.

7. Drehvorrichtung nach Anspruch 6, **dadurch gekennzeichnet, dass** die erste und zweite Führungseinrichtung durch entsprechende Gruppen von Drehkörpern (40) gebildet werden.

8. Drehvorrichtung nach Anspruch 6 oder 7, **dadurch gekennzeichnet, dass** die ersten klauenähnlichen Elemente (31a, 31b) jeweils Aussparungen (41) aufweisen, welche mit den ersten und zweiten Führungseinrichtungen (40) in einer Längsgleitbeziehung zusammenwirken.

9. Drehvorrichtung nach Anspruch 1, **dadurch gekennzeichnet, dass** die klauenähnlichen Elemente (31a, 31b) entsprechende bogenförmige äußere Kanten aufweisen, welche auf einem gemeinsamen kreisförmigen Pfad liegen und entsprechende Sätze von Zähnen (310a, 310b) aufweisen, und dass die entsprechenden Antriebseinrichtungen (200) auf die Sätze von Zähnen (310a, 310b) wirken, welche an den klauenähnlichen Elementen angeordnet sind.

10. Drehvorrichtung nach Anspruch 9, **dadurch gekennzeichnet, dass**:
die klauenähnlichen Elemente (31a, 31b) eine vorgegebene ringförmige Erstreckung aufweisen, und
die entsprechenden Antriebseinrichtungen eine angegliederte Vielzahl von Drehantriebselementen (33) tragen, dessen Anzahl derart ist, dass unabhängig von der Position, welche in der koordinierten Drehbewegung in der gleichen Richtung erreicht wird, jedes der klauenähnlichen Elemente (31a, 31b) in einer Kooperationsbeziehung mit zumindest zwei der Drehelemente (33) angeordnet ist.

11. Drehvorrichtung nach Anspruch 10, **dadurch gekennzeichnet, dass** die Drehelemente gleichmäßig entlang des Pfades der koordinierten Drehbewegung der klauenähnlichen Elemente (31a, 31b) in der gleichen Richtung beabstandet sind.

12. Drehvorrichtung nach Anspruch 1, **dadurch gekennzeichnet, dass** die Dreheinrichtung (11) aufweist:
ein Hauptantriebsrad (32), welches an den gegenüberliegenden Seiten der Dreheinheit (11) hinsichtlich des Vorrückungspfads der Formen (M) angeordnet ist, und
zumindest ein kinematisches Übertragungselement (33), welches sich durch die Dreheinheit (11) erstreckt, um die Bewegung von dem Hauptantriebsrad (32) zu den klauenähnlichen Elementen (31a, 31b) zu übertragen.

13. Drehvorrichtung nach Anspruch 12, **dadurch gekennzeichnet, dass** die Dreheinheit (11) aufweist:
einen Statorabschnitt (30),
das Hauptantriebsrad (32), welches an dem Statorabschnitt (30) an gegenüberliegenden Seiten zu dem Vorrückungspfad der Formen (M) montiert ist,
Drehstützeinrichtungen (40, 41) zum Stützen der klauenähnlichen Elemente (31a, 31b), so dass diese an dem Statorabschnitt (30) an der Seite der Dreheinheit (11) rotieren können, welche dem Vorrückungspfad der Formen (M) zugewandt ist, und
eine Vielzahl von kinematischen Übertragungselementen in Form der Drehelemente (33), welche um die Peripherie des Statorabschnitts (30) verteilt sind, um die Bewegung von dem Hauptantriebsrad (32) zu den klauenähnlichen Elementen (31a, 31b) zu übertragen.

14. Drehvorrichtung nach Anspruch 13, **dadurch gekennzeichnet, dass** sowohl das Hauptantriebsrad (32) als auch die klauenähnlichen Elemente (31a, 31b) entsprechende gezahnte Umfangsabschnitte (32a, 310a, 310b) aufweisen, und dass sich die Drehelemente (33) im wesentlichen transversal relativ zu dem Statorabschnitt (30) mit entsprechenden Endringzahnrädern (33a, 33b) erstrecken, welche mit dem Umfangszahn des Hauptantriebszahnrads (32) und jeweils mit den klauenähnlichen Elementen (31a, 31b) kämmen.

15. Drehvorrichtung gemäß einem der Ansprüche 13 und 14, **dadurch gekennzeichnet, dass** die Drehelemente (33) an dem Statorabschnitt (30) der Dreheinheit zwischen den entsprechenden Lagern (34) montiert sind.

16. Drehvorrichtung nach einem der Ansprüche 1 bis 15, **dadurch gekennzeichnet, dass** die Dreheinrichtung (11) in einer fixierten Position relativ zu dem Vorrückungspfad der Formen (M) lokalisiert ist.

17. Drehvorrichtung gemäß einem der Ansprüche 1 bis 15, **dadurch gekennzeichnet, dass** die Dreheinheit (11) entsprechende angegliederte Antriebseinrichtungen (12 bis 19, 160) trägt, um eine Hin- und Herbewegung auf die Dreheinheit (11) aufzubringen, welche im wesentlichen koplanar mit dem Vorrückungspfad der Formen ist.

18. Drehvorrichtung nach Anspruch 17, **dadurch gekennzeichnet, dass** die Antriebseinrichtung eine Kurbelantriebseinheit (13 bis 19) aufweist.

19. Drehvorrichtung nach einem der Ansprüche 17 oder 18, **dadurch gekennzeichnet, dass** die entsprechenden Antriebseinrichtungen (200), welche die Drehbewegung auf die klauenähnlichen Elemente (31a, 31b) aufbringen, zumindest einen Hauptmotor (200) aufweisen, welcher in einer fixierten Position relativ zu dem Vorrückungspfad der Formen lokalisiert ist, und ein Übertragungselement (22) aufweist, welches zwischen dem Hauptmotor (200) und der Dreheinheit (11) wirkt, welche die Hin- und Herbewegung durchführt.

20. Drehvorrichtung gemäß Anspruch 19, **dadurch gekennzeichnet, dass** die Einrichtung (22) zur Übertragung der Bewegung eine parallele Kurbelkupplung (PK) aufweist.

21. Drehvorrichtung nach einem der Ansprüche 1 bis 20, **dadurch gekennzeichnet, dass** diese ein Paar von Dreheinheiten (11) aufweist, welche symmetrisch an entgegengesetzten Positionen relativ zu dem Vorrückungspfad der Formen (M) angeordnet sind.

22. Drehvorrichtung nach Anspruch 17 und 21, **dadurch gekennzeichnet, dass** die Dreheinheiten (11) des Paares miteinander fest durch ein Rahmenelement (15) verbunden sind, welches sich transversal relativ zu dem Vorrückungspfad der Formen (M) erstreckt, wobei das Rahmenelement (15) ebenso die Hin- und Herbewegung durchführt.

23. Drehvorrichtung nach einem der Ansprüche 21 und 22, **dadurch gekennzeichnet, dass** die Dreheinheiten (11) des Paares jeweils angegliederte Antriebskurbeln (13) tragen, wobei die jeweiligen Antriebskurbeln (13) miteinander fest durch eine Verbindungswelle (14) verbunden sind, welche sich transversal relativ zu dem Vorrückungspfad der Formen erstreckt.

24. Drehvorrichtung gemäß Anspruch 1, **dadurch gekennzeichnet, dass** sich die klauenähnlichen Elemente in den Raum zwischen der Fördereinrichtung (C) und den Formen (M) erstrecken und für die Drehung an dem Statorabschnitt (30) durch homozentrische Lagerelemente (40) gelagert werden, welche eine rein virtuelle zentrale Achse der Drehung definieren.

## Revendications

1. Dispositif (10) pour retourner des moules (M) comportant des faces opposées respectives et avançant le long d'une trajectoire située dans un plan donné, comprenant, sur au moins un côté de la trajectoire, une unité de retournement (11) comprenant une paire d'éléments du type mâchoires (31a, 31b) qui peuvent s'engager avec deux faces opposées des moules (M) étant retournés, l'unité de retournement (11) supportant un moyen d'entraînement associé respectif (200) pour communiquer aux éléments du type mâchoires se faisant face (31a, 31b) un mouvement de rotation coordonné dans la même direction, **caractérisé en ce que** :
- l'unité de retournement (11) comprend une partie formant stator (30) sur laquelle les éléments du type mâchoires (31a, 31b) sont montés avec la capacité d'avoir le mouvement de rotation,
- chacun des éléments du type mâchoires (31a, 31b) comporte un bord avant (44) pour coopérer avec une des faces opposées respectives des moules (M) durant le mouvement de rotation, le bord avant (44) définissant, avec le bord avant homologue (44) de l'autre élément du type mâchoire (31a, 31b), un évidement (24) qui peut s'étendre dans le plan donné pour permettre aux moules (M) d'avancer à travers l'unité de retournement (11), ledit évidement (24) s'étendant au moins en partie dans la partie formant stator (30) de l'unité de retournement (11) pour loger un moyen formant transporteur (C) qui transporte les moules (M) durant le mouvement d'avance le long de la trajectoire.

2. Dispositif de retournement selon la revendication 1, **caractérisé en ce que** les éléments du type mâchoires (31a, 31b) ont généralement la forme d'un C avec un côté interne généralement droit (44) pour coopérer avec les moules (M) et un côté externe généralement arqué (310a, 310b).

3. Dispositif de retournement selon la revendication 1 ou la revendication 2, **caractérisé en ce que** les éléments du type mâchoires (31a, 31b) comprennent des éléments en saillie respectifs (44) pour coopérer avec les deux faces opposées des moules.

4. Dispositif de retournement selon la revendication 1, **caractérisé en ce que** le moyen formant transporteur (C) comprend des éléments d'engagement (P) qui peuvent agir sur les moules (M) dans une relation de transport sensiblement dans la région des éléments du type mâchoires (31a, 31b).

5. Dispositif de retournement selon la revendication 4, **caractérisé en ce que** les éléments d'engagement comprennent au moins une tige (P) s'étendant vers la trajectoire d'avance des moules (M) de manière à définir, par rapport au moule engagé au moment en question, un centre de rotation pour le mouvement de rotation.

6. Dispositif de retournement selon la revendication 1, **caractérisé en ce que** l'unité de retournement (11) comprend :
- une partie formant stator (30),
- des premier et deuxième moyens de guidage (40) définissant chacun un arc respectif d'une trajectoire circulaire, les premier et deuxième moyens de guidage (40) coopérant avec les éléments du type mâchoires (31a, 31b) dans une relation de support avec mobilité afin de permettre aux éléments du type mâchoires (31a, 31b) d'avoir le mouvement de rotation coordonné dans la même direction.

7. Dispositif de retournement selon la revendication 6, **caractérisé en ce que** les premier et deuxième moyens de guidage sont constitués par des groupes respectifs de corps rotatifs (40).

8. Dispositif de retournement selon la revendication 6 ou la revendication 7, **caractérisé en ce que** les premiers éléments du type mâchoires (31a, 31b) comprennent des évidements respectifs (41) coopérant avec les premier et deuxième moyens de guidage (40) dans une relation de glissement longitudinal.

9. Dispositif de retournement selon la revendication 1, **caractérisé en ce que** les éléments du type mâchoires (31a, 31b) comportent des bords externes arqués respectifs se situant sur une trajectoire circulaire commune et comportant des jeux respectifs de dents (310a, 310b), et **en ce que** le moyen d'entraînement respectif (200) agit sur les jeux respectifs de dents (310a, 310b) situés sur les éléments du type mâchoires.

10. Dispositif de retournement selon la revendication 9, **caractérisé en ce que** :
- les éléments du type mâchoires (31a, 31b) ont une étendue angulaire donnée, et
- le moyen d'entraînement respectif porte une pluralité associée d'éléments d'entraînement rotatifs (33) dont le nombre est tel que, quelle que soit la position atteinte dans le mouvement de rotation coordonné dans la même direction, chacun des éléments du type mâchoires (31a, 31b) est agencé en une relation de coopération avec au moins deux des éléments rotatifs (33).

11. Dispositif de retournement selon la revendication 10, **caractérisé en ce que** les éléments rotatifs sont équidistants le long de la trajectoire du mouvement de rotation coordonné des éléments du type mâchoires (31a, 31b) dans la même direction.

12. Dispositif de retournement selon la revendication 1, **caractérisé en ce que** l'unité de retournement (11) comprend :
- une roue menante principale (32) agencée sur le côté de l'unité de retournement (11) à l'opposé de la trajectoire d'avance des moules (M), et
- au moins un élément de transmission cinématique (33) qui s'étend à travers l'unité de retournement (11) afin de transmettre le mouvement de la roue menante principale (32) aux éléments du type mâchoires (31a, 31b).

13. Dispositif de retournement selon la revendication 12, **caractérisé en ce que** l'unité de retournement (11) comprend :
- une partie formant stator (30),
- la roue menante principale (32) montée sur la partie formant stator (30), sur le côté à l'opposé de la trajectoire d'avance des moules (M),
- des moyens de support en rotation (40, 41) pour supporter les éléments du type mâchoires (31a, 31b) de manière qu'ils puissent tourner sur la partie formant stator (30) sur le côté de l'unité de retournement (11) donnant sur la trajectoire d'avance des moules (M), et
- une pluralité d'éléments de transmission cinématique sous la forme d'éléments rotatifs (33) répartis autour de la périphérie de la partie formant stator (30) afin de transmettre le mouvement de la roue menante principale (32) aux éléments du type mâchoires (31a, 31b).

14. Dispositif de retournement selon la revendication 13, **caractérisé en ce qu'**à la fois la roue menante principale (32) et les éléments du type mâchoires (31a, 31b) comportent des parties périphériques dentées respectives (32a, 310a, 310b), et **en ce que** les éléments rotatifs (33) s'étendent généralement transversalement par rapport à la partie formant stator (30) avec des engrenages annulaires d'extrémité respectifs (33a, 33b) en prise avec les dents périphériques de la roue menante principale (32) et avec les éléments du type mâchoires (31a, 31b), respectivement.

15. Dispositif de retournement selon l'une quelconque des revendications 13 et 14, **caractérisé en ce que** les éléments rotatifs (33) sont montés sur la partie formant stator (30) de l'unité de retournement avec des paliers respectifs (34) interposés.

16. Dispositif de retournement selon l'une quelconque des revendications 1 à 15, **caractérisé en ce que** l'unité de retournement (11) est située dans une position fixe par rapport à la trajectoire d'avance des moules (M).

17. Dispositif de retournement selon l'une quelconque des revendications 1 à 15, **caractérisé en ce que** l'unité de retournement (11) porte des moyens d'entraînement associés respectifs (12 à 19, 160) pour communiquer à l'unité de retournement (11) un mouvement de va-et-vient sensiblement dans le même plan que la trajectoire d'avance des moules.

18. Dispositif de retournement selon la revendication 17, **caractérisé en ce que** les moyens d'entraînement comprennent une unité d'entraînement à manivelle (13 à 19).

19. Dispositif de retournement selon l'une quelconque des revendications 17 et 18, **caractérisé en ce que** le moyen d'entraînement respectif (200) qui communique le mouvement de rotation aux éléments du type mâchoires (31a, 31b) comprend au moins un moteur principal (200) situé dans une position fixe par rapport à la trajectoire d'avance des moules, ainsi qu'un élément de transmission (22) opérant entre le moteur principal (200) et l'unité de retournement (11) qui effectue le mouvement de va-et-vient.

20. Dispositif de retournement selon la revendication 19, **caractérisé en ce que** le moyen (22) pour transmettre le mouvement comprend un accouplement à manivelle parallèle (PK).

21. Dispositif de retournement selon l'une quelconque des revendications 1 à 20, **caractérisé en ce qu'**il comprend une paire d'unités de retournement (11) disposées en des positions opposées symétriques par rapport à la trajectoire d'avance des moules (M).

22. Dispositif de retournement selon la revendication 17 et la revendication 21, **caractérisé en ce que** les unités de retournement (11) de la paire sont reliées l'une à l'autre rigidement par un élément de châssis (15) qui s'étend transversalement par rapport à la trajectoire d'avance des moules (M), l'élément de châssis (15) effectuant également le mouvement de va-et-vient.

23. Dispositif de retournement selon l'une quelconque des revendications 21 et 22, **caractérisé en ce que** les unités de retournement (11) de la paire portent des manivelles d'entraînement associées, respectives (13), les manivelles d'entraînement respectives (13) étant reliées l'une à l'autre rigidement par un arbre de connexion (14) s'étendant transversalement par rapport à la trajectoire d'avance des moules.

24. Dispositif de retournement selon la revendication 1, **caractérisé en ce que** les éléments du type mâchoires s'étendent dans l'espace entre le moyen formant transporteur (C) et les moules (M) et sont supportés pour rotation sur la partie formant stator (30) par des éléments de support homocentriques (40) définissant un axe central de rotation purement virtuel.
